# EUROPEAN PATENT APPLICATION

(11) **EP 4 435 424 A1**
(43) Date of publication of application: **25.09.2024**
(21) Application number: 22895919.3
(22) Date of filing: 03.11.2022
(51) Int. Cl.: G01N 25/20, G01J 5/00, G01J 5/08

(54) **DEVICE AND METHOD FOR MEASURING TIME-RESOLVED THERMAL IMAGE**

(30) Priority: 18.11.2021 KR 20210159453; 13.12.2021 KR 20210177390
(71) Applicant: Korea Basic Science Institute, Daejeon 34133 (KR)
(72) Inventor: KIM, Dong Uk, Daejeon 34140 (KR); CHANG, Ki Soo, Daejeon 34070 (KR); JEONG, Chan Bae, Daejeon 34168 (KR); HAN, Il Kyu, Daejeon 34121 (KR)
(74) Representative: Modiano, Gabriella Diana
(86) International application number: PCT/KR2022/017182
(87) International publication number: WO 2023/090712

(57) **Abstract**

A device and a method for measuring a time-resolved thermal image are disclosed. An embodiment comprises an optical imaging unit comprising a camera and a probe light source, the optical imaging unit emitting a probe optical signal from the probe light source to a sample during a time-resolution time; a control unit for outputting a first trigger signal to the camera, outputting a driving signal to the probe light source such that the probe light source emits the probe light source to the sample during the time-resolution time, outputting a second trigger signal to a bias unit in an turn-on interval, and outputting no second trigger signal to the bias unit in a turn-off interval; and a bias unit for applying a bias signal generated on the basis of the second trigger signal in the turn-on interval to the sample, and applying no bias signal to the sample in the turn-off interval. The camera generates a first reflection image of the sample by using a signal reflected from the sample when the probe optical signal is emitted to the sample during the time-resolution time in the turn-on interval. The camera generates a second reflection image of the sample by using a signal reflected from the sample when the probe optical signal is emitted to the sample during the time-resolution time in the turn-off interval. The control unit generates a time-resolved thermoreflectance image of the sample on the basis of the generated first and second reflection images.

## Description

### TECHNICAL FIELD

The following embodiments relate to a device and method for measuring a time-resolved thermal image.

### BACKGROUND ART

Recently, with the development of semiconductor manufacturing process technology, fine patterning and three-dimensional high integration have been achieved, and large amounts of local heat may be easily generated in fine patterns of highly integrated devices. The local heat generated during operation of electrical/electronic devices may cause issues such as failure, shortened average lifespan, and reduced reliability. In order to analyze the cause of heat generation within a device, micro-thermography that may detect a little amount of heat generation or produce images of local heat distribution has been developed. Furthermore, in order to analyze the cause of heat generation in various methods, there is an increasing demand for time-resolved thermal imaging technology that may analyze heat response characteristics or heat transfer paths over time.

The above description has been possessed or acquired by the inventor(s) in the course of conceiving the present disclosure and is not necessarily an art publicly known before the present application is filed.

### DISCLOSURE OF THE INVENTION

### TECHNICAL SOLUTIONS

According to an aspect, a device for measuring a time-resolved thermal image includes an optical imaging unit including a camera and a probe light source and configured to irradiate a probe optical signal of the probe light source to a sample for a time-resolution time, a control unit configured to output a first trigger signal to the camera, configured to output a driving signal to the probe light source such that the probe light source irradiates the probe optical signal to the sample for the time-resolution time, configured to output a second trigger signal to a bias unit in a turn-on interval, and configured not to output the second trigger signal to the bias unit in a turn-off interval, and a bias unit configured to apply, to the sample, a bias signal generated based on the second trigger signal in the turn-on interval and configured not to apply the bias signal to the sample in the turn-off interval.

The camera may be configured to generate a first reflection image of the sample using a signal reflected from the sample when the probe optical signal is irradiated to the sample for the time-resolution time in the turn-on interval and generate a second reflection image of the sample using a signal reflected from the sample when the probe optical signal is irradiated to the sample for the time-resolution time in the turn-off interval, and the control unit may be configured to generate a time-resolved thermoreflectance image of the sample, based on the generated first reflection image and the generated second reflection image.

A duty cycle of the second trigger signal may vary.

The bias unit may include a waveform amplifier, wherein the control unit may be configured to output the second trigger signal of a first duty cycle to the waveform amplifier, and wherein the waveform amplifier may be configured to generate the bias signal by amplifying the second trigger signal.

Each of the turn-on interval and the turn-off interval may have a time length corresponding to one image frame of the camera.

The control unit may be configured to output a probe light source monitoring signal to an oscilloscope to display an output point in time of the driving signal.

The control unit may be configured to, when an application point in time of the bias signal lags by a first time with respect to an output point in time of the first trigger signal and an output point in time of the second trigger signal, control the probe light source such that an output point in time of the probe optical signal lags by the first time.

The control unit may be configured to select an irradiation point in time of the probe light source as a specific point in time in a subsequent image frame of the camera and generate a time-resolved thermoreflectance image, of the sample, corresponding to the selected specific point in time.

According to another aspect, a method for measuring a time-resolved thermal image includes outputting a first trigger signal to a camera, outputting a driving signal to a probe light source such that the probe light source irradiates a probe optical signal to a sample for a time-resolution time and irradiating the probe optical signal through the probe light source to the sample for the time-resolution time, not outputting a second trigger signal to a bias unit in a turn-off interval and outputting the second trigger signal to the bias unit in a turn-on interval, not applying a bias signal to the sample in the turn-off interval and applying the bias signal to the sample by generating the bias signal based on the second trigger signal in the turn-on interval, generating a first reflection image of the sample using a signal reflected from the sample when the probe optical signal is irradiated to the sample for the time-resolution time in the turn-on interval, generating a second reflection image of the sample using a signal reflected from the sample when the probe optical signal is irradiated to the sample for the time-resolution time in the turn-off interval, and generating a time-resolved thermoreflectance image of the sample, based on the generated first reflection image and the generated second reflection image.

A duty cycle of the second trigger signal may vary.

The bias unit may include a waveform amplifier, wherein the waveform amplifier may be configured to generate the bias signal by amplifying the second trigger signal when the waveform amplifier receives the second trigger signal of a first duty cycle.

Each of the turn-on interval and the turn-off interval may have a time length corresponding to one image frame of the camera.

### EFFECTS OF THE INVENTION

Embodiments may provide an analysis of heat response characteristics or heat transfer paths of micro-electrical/electronic devices.

Embodiments may provide monitoring for an illumination point in time (or an irradiation point in time) of a probe light source without separately using an optical detector that may detect a probe optical signal, by using a monitoring signal for monitoring the probe light source, and may provide easy synchronization of the illumination point in time of the probe light source and an application point in time of a bias signal.

Embodiments may provide simple control of a probe light source, since a non-heating reflection image of a sample may be obtained in an interval in which a bias signal is turned off without returning an illumination point in time, even if the illumination point in time of the probe light source increases.

Embodiments may provide reduced degradation of a sample since a bias signal may be repeatedly applied to the sample in each interval.

### BRIEF DESCRIPTION OF DRAWINGS

FIG. 1 is a block diagram illustrating a time-resolved thermal image measurement device according to an embodiment.
FIGS. 2 and 3 are diagrams illustrating a configuration and an operation in detail of a time-resolved thermal image measurement device, according to an embodiment.
FIG. 4 is a diagram illustrating adjustment of an output point in time of a probe light train, according to an embodiment.
FIG. 5 is a flowchart illustrating a method of measuring a time-resolved thermal image, according to an embodiment.

### BEST MODE FOR CARRYING OUT THE INVENTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like, are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which the present disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, embodiments will be described in detail with reference to the accompanying drawings. When describing the embodiments with reference to the accompanying drawings, like reference numerals refer to like components and a repeated description related thereto will be omitted.

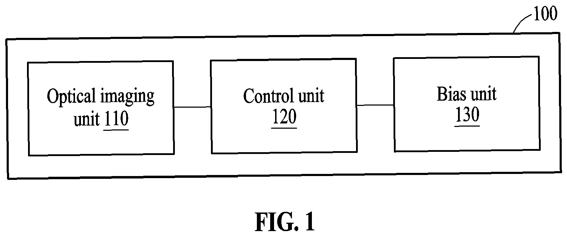

FIG. 1 is a block diagram illustrating a time-resolved thermal image measurement device according to an embodiment.

A time-resolved thermal image measurement device 100 according to an embodiment may be used for measuring heat generation distribution over time of semiconductor devices or samples, such as micro-electromechanical systems (MEMS) devices, logic devices, application-specific integrated circuit (ASIC) devices, and sensor devices. In addition, the time-resolved thermal image measurement device 100 may be used for analysis of heat response characteristics and analysis of heat transfer paths to analyze the causes and solve the issues of physical deformation or destruction of devices due to thermo-mechanical stress during on-off high-speed switching.

Referring to FIG. 1, the time-resolved or transient thermal image measurement device 100 according to an embodiment may include an optical imaging unit 110, a control unit 120, and a bias unit 130.

The optical imaging unit 110 may include a camera, a probe light source, an optical beam splitter, and an objective lens. The probe light source may be a probe light source of various wavelengths. For example, the probe light source may be a light-emitting diode (LED) probe light source or a laser diode (LD) probe light source but is not limited thereto.

The optical imaging unit 110 irradiates (or illuminates) a sample with a probe light train (in other words, a probe optical signal) of the probe light source for illuminating only for a time-resolution time. The probe light train may be reflected by the sample, and the camera may use a reflected signal to generate a reflection image of the sample.

The control unit 120 may output a first trigger signal to the camera to drive the camera, may output a driving signal (e.g., a driving signal in the form of a pulse) to the probe light source such that the probe light source irradiates the probe light train to the sample for the time-resolution time, may output a second trigger signal to the bias unit 130 in a turn-on interval, and may not output the second trigger signal to the bias unit 130 in a turn-off interval. The control unit 120 may repeat an output and a non-output of the second trigger signal.

The bias unit 130 may generate a bias signal based on the second trigger signal in the turn-on interval and may apply the generated bias signal to the sample. The sample may generate heat according to the bias signal. The bias unit 130 does not apply the bias signal to the sample in the turn-off interval. The bias unit 130 may repeat application and non-application of the bias signal.

The camera in the optical imaging unit 110 may generate a first reflection image in the turn-on interval and a second reflection image in the turn-off interval. Here, the first reflection image may represent an image generated using a signal reflected from the sample when the probe light train is irradiated to the sample. In the turn-on interval, since the sample generates heat according to the bias signal, the first reflection image may correspond to a reflection image of the sample generating heat. The second reflection image may represent an image generated using a signal reflected from the sample when the probe light train is irradiated to the sample in the turn-off interval. In the turn-off interval, since the sample does not generate heat, the second reflection image may correspond to a reflection image of the sample that does not generate heat.

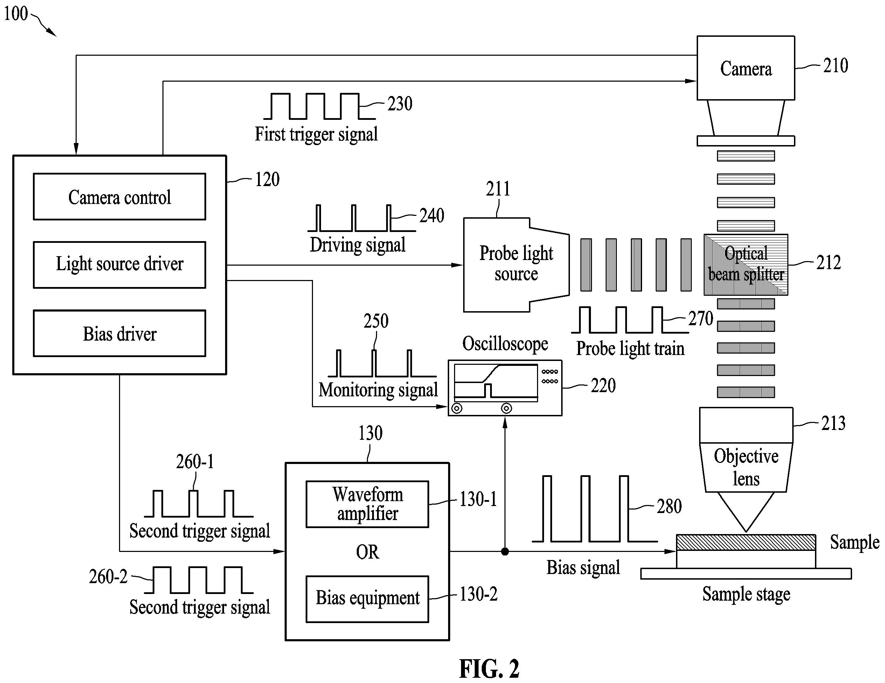

The control unit 120 may generate a time-resolved thermoreflectance image of the sample, based on the first reflection image and the second reflection image. Hereinafter, a time-resolved thermal image measurement device is described in detail with reference to FIG. 2.

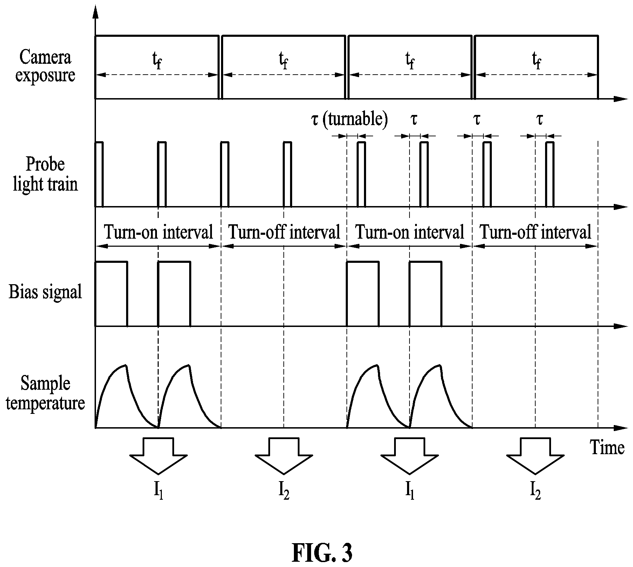

FIGS. 2 and 3 are diagrams illustrating a configuration and an operation in detail of a time-resolved thermal image measurement device, according to an embodiment.

Referring to FIG. 2, the time-resolved thermal image measurement device 100 includes a camera 210, a probe light source 211, an optical beam splitter 212, an objective lens 213, a control unit 120, and a bias unit 130. As described with reference to FIG. 1, the optical imaging unit 110 may include the camera 210, the probe light source 211, the optical beam splitter 212, and the objective lens 213.

In an embodiment, an LD probe light source may be used as the probe light source 211. In this case, instead of the optical beam splitter 212 of FIG. 2, a linear polarizer, a λ/4 wave plate, and a polarization optical beam splitter may be included in the optical imaging unit 110.

The control unit 120 may output a first trigger signal 230 (e.g., a voltage signal) to the camera 210. For example, the control unit 120 may output the first trigger signal 230 modulated at a first frequency (e.g., 4 hertz (Hz)) to the camera 210. The first trigger signal 230 may be a transistor-transistor logic (TTL) signal and may be a 5 volt (V) square wave, and a duty cycle may be 50 percents (%). In other words, the first trigger signal 230 may have the form of a TTL (5V, duty cycle 50%) signal. The duty cycle of the first trigger signal 230 may be varied by the control unit 120.

The control unit 120 may generate a driving signal 240 (e.g., a current signal) and a monitoring signal 250 (e.g., a voltage signal) through a light source driver, may output the driving signal 240 to the probe light source 211, and may output the monitoring signal 250 to an oscilloscope 220. For example, the control unit 120 may output the driving signal 240 modulated at a second frequency (e.g., 1 kilohertz (kHz)) to the probe light source 211 and may output the monitoring signal 250 modulated at the second frequency (e.g., 1 kHz) to the oscilloscope 220. The driving signal 240 and the monitoring signal 250 may have the same duty cycle and phase. The pulse width of each of the driving signal 240 and the monitoring signal 250 may be determined by an illumination time (time resolution) of the probe light source 211. For example, the pulse width of each of the driving signal 240 and the monitoring signal 250 may be tens of nanoseconds (ns) to tens of microseconds (us).

The probe light source 211 may output a probe light train 270 according to the driving signal 240. The probe light train 270 may be in the form of a pulse. For example, the probe light train 270 may be in the form of a pulse shorter than the period of a bias signal 280. The illumination time of the probe light source 211 may be determined by the duty cycle of the driving signal 240 (e.g., the pulse width of the driving signal 240).

The control unit 120 may generate a second trigger signal 260-1 or 260-2 (e.g., a voltage signal) through a bias driver in a turn-on interval and may output the second trigger signal 260-1 or 260-2 to the bias unit 130. For example, the control unit 120 may output the second trigger signal 260-1 or 260-2 modulated at the second frequency (e.g., 1 kHz) to the bias unit 130 in the turn-on interval.

The control unit 120 may vary the duty cycle of the second trigger signal 260-1 or 260-2 through the bias driver. The duty cycle of the second trigger signal 260-1 or 260-2 may be determined depending on whether the bias unit 130 includes a waveform amplifier 130-1 or bias equipment. For example, the bias unit 130 may include the waveform amplifier 130-1. In this case, the control unit 120 may output the second trigger signal 260-1 having a duty cycle less than 50% (e.g., duty cycle 25%) to the waveform amplifier 130-1. The waveform amplifier 130-1 may generate the bias signal 280 (e.g., a bias signal with a duty cycle of 25%) by amplifying the second trigger signal 260-1. The magnitude of the bias signal 280 may be adjusted by adjusting the gain of the waveform amplifier 130-1. In another example, the bias unit 130 may include bias equipment 130-2. In this case, the control unit 120 may output the second trigger signal 260-2 in the form of a TTL (5V, duty cycle 50%) signal to the bias equipment 130-2. The bias equipment 130-2 may adjust the magnitude of the bias signal 280 having a duty cycle less than 50% (e.g., duty cycle 25%) and may output the bias signal 280. Setting the duty cycle of the bias signal 280 to less than 50% (e.g., 25%) is to ensure that the temperature of the sample is lowered to room temperature before a next bias signal is applied to the sample.

In an embodiment, the control unit 120 may vary the phase of the monitoring signal 250 so that the phase of the monitoring signal 250 is the same as the phase of the bias signal 280.

In an embodiment, a variable voltage attenuator may be located at the output terminal of the bias unit 130, and the magnitude of the bias signal 280 may be adjusted by the variable voltage attenuator.

In an embodiment, the control unit 120 may set the second trigger signal 260-2 to match an external trigger signal condition (TTL or low voltage transistor-transistor logic (LVTTL)) of the bias equipment 130-2 and may output the second trigger signal 260-2 to the bias equipment 130-2.

In an embodiment, the control unit 120 may simultaneously output the first trigger signal 230, the driving signal 240, the monitoring signal 250, and the second trigger signal 260-1 or 260-2. In another embodiment, the control unit 120 may control the output of the light source driver and the bias driver using the output of the first trigger signal 230. In other words, the output of the driving signal 240, the monitoring signal 250, and the second trigger signal 260-1 or 260-2 may be controlled by using the output of the first trigger signal 230.

The control unit 120 may output the first trigger signal 230, the second trigger signal 260-1 or 260-2, and the monitoring signal 250 to the oscilloscope 220. In addition, the bias unit 130 may output the bias signal 280 to the oscilloscope 220.

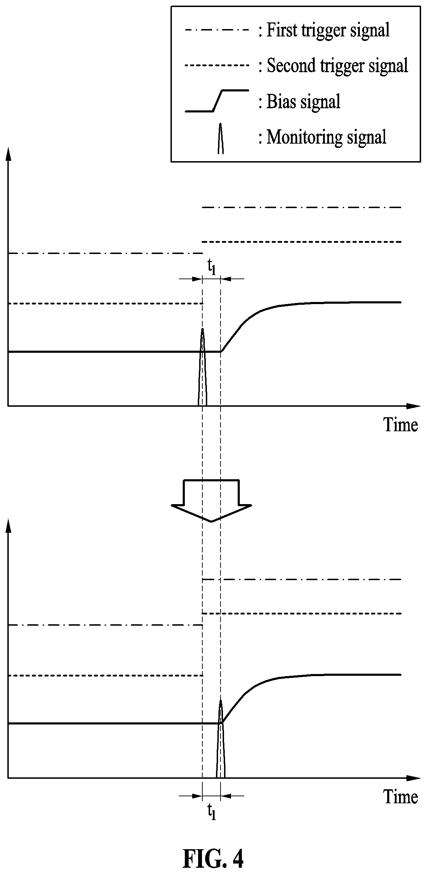

A lag between the first trigger signal 230, the second trigger signal 260-1 or 260-2, the monitoring signal 250, and the bias signal 280 may be confirmed through the oscilloscope 220. When an application point in time of the bias signal 280 lags by a first time from an output point in time of the first trigger signal 230 and an output point in time of the second trigger signal 260-1 or 260-2, the control unit 120 may control the probe light source 211 such that an output point in time of the probe light train 270 (or an illumination point in time of the probe light source 211) lags by the first time. In other words, the output point in time of the probe light train 270 may be synchronized with the application point in time of the bias signal 280. This is described further below with reference to FIG. 4.

When the output point in time of the probe light train 270 is synchronized with the application point in time of the bias signal 280, the time-resolved thermal image measurement device 100 may perform an operation of obtaining a time-resolved thermoreflectance image of the sample.

As shown in the example illustrated in FIG. 3, the bias unit 130 may apply the bias signal 280 to the sample in a turn-on interval and may not apply the bias signal 280 to the sample in a turn-off interval. Accordingly, heat generation may occur in the sample periodically and repeatedly in each interval.

The bias signal 280 may be alternately turned on and off depending on an image frame of the camera. In other words, a time length (t_{f} of FIG. 3) of one image frame of the camera may be the same as a time length of the turn-on interval and a time length of the turn-off interval.

The probe light train 270 may be irradiated to the sample through the optical beam splitter 212 and the objective lens 213 in the turn-on interval and the turn-off interval, and a signal reflected by the sample may be directed towards the camera 210 through the objective lens 213 and the optical beam splitter 212.

The camera 210 may generate a reflection image I₁ (i.e., a first reflection image) when the sample generates heat, by using the signal in which the probe light train 270 is reflected by the sample in the turn-on interval. The camera 210 may use the signal, in which the probe light train 270 is reflected by the sample in the turn-off interval, to generate a reflection image I₂ (i.e., a second reflection image) when the sample does not generate heat.

The control unit 120 may generate the time-resolved thermoreflectance image of the sample using the first reflection image and the second reflection image. For example, the control unit 120 may generate the time-resolved thermoreflectance image of the sample according to the equation (I₁-I₂)/I₂.

The control unit 120 may obtain a series of time-resolved thermoreflectance images by gradually changing the output point in time of the probe light train 270 from the application point in time of the bias signal 280 to a measurement point in time of interest. For example, when a change in heat generation of the sample is to be measured in 1 us units for 20 us after the bias application, the control unit 120 may set the pulse width of the probe light train 270 to 1 us. The control unit 120 may increase the output point in time of the probe light train 270 twenty times by 1 us and may obtain the time-resolved thermoreflectance image each time. More specifically, the control unit 120 may control the probe light source 211 to lag the output point in time of the probe light train 270 by 1 us with respect to the application point in time of the bias signal 280 (e.g., the control unit 120 is set to τ=1 us in a third image frame of FIG. 3) and may obtain the time-resolved thermoreflectance image of the sample using the first reflection image and the second reflection image when the output point in time of the probe light train 270 lags by 1 us. The control unit 120 may allow the output point in time of the probe light train 270 to lag by 1 us again (e.g., τ=2 us is set in a fifth image frame (not shown in FIG. 3)) and may obtain the time-resolved thermoreflectance image of the sample using the first reflection image and the second reflection image when the output point in time of the probe light train 270 lags by 2 us with respect to the application point in time of the bias signal 280. Accordingly, the control unit 120 may obtain a series of time-resolved thermoreflectance images of the sample by delaying the output point in time of the probe light train 270 by 1 us. The heat generation characteristics of the sample or heat transfer paths within the sample may be analyzed through the obtained time-resolved thermoreflectance images.

FIG. 4 is a diagram illustrating adjustment of an output point in time of a probe light train, according to an embodiment.

Referring to FIG. 4, the oscilloscope 220 may display the first trigger signal 230, the second trigger signal 260-1 or 260-2, the monitoring signal 250, and the bias signal 280 on a display.

When the control unit 120 applies the driving signal 240 to the probe light source 211, the control unit 120 may generate the monitoring signal 250 and may output the monitoring signal 250 to the oscilloscope 220. The time-resolved thermal image measurement device 100 according to an embodiment may measure lag time between the probe light source train 270 and the bias signal 280 through the oscilloscope 220 using the monitoring signal 250. The time-resolved thermal image measurement device 100 according to an embodiment may measure the lag time between the probe light source train 270 and the bias signal 280 using the monitoring signal 250, even though the time-resolved thermal image measurement device 100 does not have a separate optical detector that may detect the probe light source train 270.

Synchronization of the first trigger signal 230, the second trigger signal 260-1 or 260-2, and the monitoring signal 250 may be confirmed. A lag between the probe light train 270 of the probe light source 211 and the monitoring signal 250 may be confirmed and a lag between the monitoring signal 250 and the bias signal 280 may be confirmed. A lag of the driving signal 240 may be adjusted as the monitoring signal 250 is being observed so that an illumination point in time of the probe light source 211 corresponds with an application point in time of the bias signal 280.

In the example shown in FIG. 4, an output point in time of each of the first trigger signal 230, the second trigger signal 260-1 or 260-2, and the monitoring signal 250 may be different to an application point in time of the bias signal 280. In other words, the bias signal 280 may lag behind the first trigger signal 230, the second trigger signal 260-1 or 260-2, and the monitoring signal 250. In this case, the control unit 120 may measure the lag time of the bias signal 280 by delaying the output point in time of the monitoring signal 250. As shown in the example of FIG. 4, when the output point in time of the monitoring signal 250 is lagged by t₁, a point in time at which the magnitude of the bias signal 280 increases may synchronize with the output point in time of the monitoring signal 250. The control unit 120 may delay an output point in time of the probe light train 270 by ti so that the output point in time of the probe light train 270 is synchronized with the application point in time of the bias signal 280. Accordingly, the probe light train 270 may be irradiated to a sample in accordance with the application point in time of the bias signal 280.

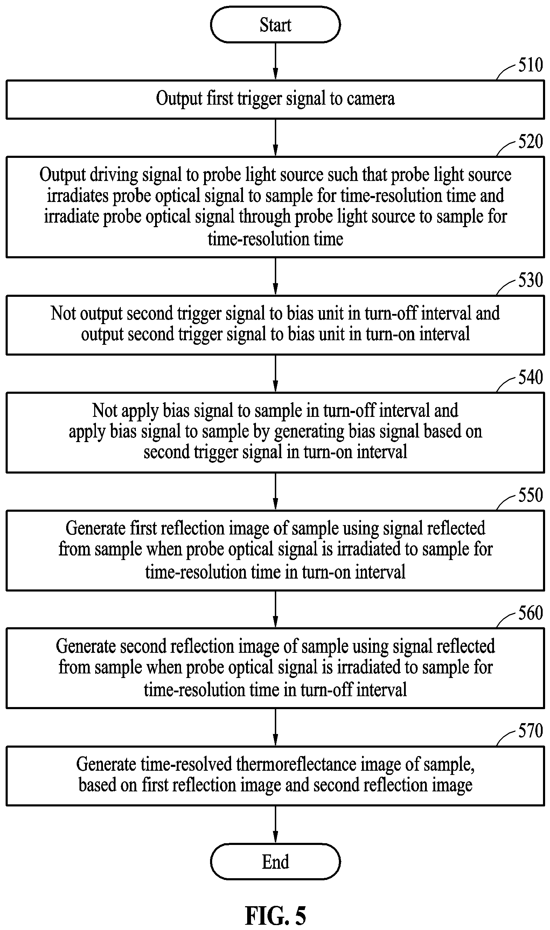

FIG. 5 is a flowchart illustrating a method of measuring a time-resolved thermal image, according to an embodiment.

Referring to FIG. 5, in operation 510, the time-resolved thermal image measurement device 100 may output the first trigger signal 230 to the camera 210.

In operation 520, the time-resolved thermal image measurement device 100 may output the driving signal 240 to the probe light source 211 such that the probe light source 211 irradiates a probe optical signal (e.g., the probe light train 270 of FIG. 2) to a sample for a time-resolution time and may irradiate the probe optical signal through the probe light source 211 to the sample for the time-resolution time.

In operation 530, the time-resolved thermal image measurement device 100 may not output the second trigger signal 260-1 or 260-2 to the bias unit 130 in a turn-off interval and may output the second trigger signal 260-1 or 260-2 to the bias unit 130 in a turn-on interval. The duty cycle of the second trigger signal 260-1 or 260-2 may vary.

In operation 540, the time-resolved thermal image measurement device 100 may not apply the bias signal 280 to the sample in the turn-off interval and may apply the bias signal 280 to the sample by generating the bias signal 280 based on the second trigger signal 260-1 or 260-2 in the turn-on interval.

In operation 550, the time-resolved thermal image measurement device 100 may generate a first reflection image of the sample using a signal reflected from the sample when the probe optical signal is irradiated to the sample for the time-resolution time in the turn-on interval. The turn-on interval may have a time length corresponding to one image frame of the camera 210, as described with reference to FIG. 3. The time-resolved thermal image measurement device 100 may obtain the first reflection image of the sample that generates heat for a time corresponding to the one image frame of the camera 210.

In operation 560, the time-resolved thermal image measurement device 100 may generate a second reflection image of the sample using a signal reflected from the sample when the probe optical signal is irradiated to the sample for the time-resolution time in the turn-off interval. The turn-off interval may have a time length corresponding to one image frame of the camera 210, as described with reference to FIG. 3. The time-resolved thermal image measurement device 100 may obtain the second reflection image of the sample that does not generate heat for a time corresponding to the one image frame of the camera 210.

In operation 570, the time-resolved thermal image measurement device 100 may generate a time-resolved thermoreflectance image of the sample, based on the generated first reflection image and the generated second reflection image.

The time-resolved thermal image measurement device 100 may select an illumination point in time of the probe light source 211 as a specific point in time in a subsequent image frame of the camera and may generate the time-resolved thermal reflection image, of the sample, corresponding to the selected specific point in time. The time-resolved thermal image measurement device 100 may gradually delay the illumination point in time of the probe light source 211 to generate a series of time-resolved thermoreflectance images of the sample.

The description provided with reference to FIGS. 1 to 4 may also apply to the description of FIG. 5, and thus, detailed description is omitted.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is singular; however, one of ordinary skill in the art will appreciate that a processing device may include a plurality of processing elements and a plurality of types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in a non-transitory computer-readable recording medium.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specifically designed and constructed for the purposes of examples, or they may be of the kind well known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as optical discs; and hardware devices that are specifically configured to store and perform program instructions, such as read-only memory (ROM), random-access memory (RAM), flash memory, and the like. Examples of program instructions include both machine code, such as one produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and/or equivalents of the claims are within the scope of the following claims.

## Claims

1. A device for measuring a time-resolved thermal image, the device comprising:
an optical imaging unit comprising a camera and a probe light source and configured to irradiate a probe optical signal of the probe light source to a sample for a time-resolution time;
a control unit configured to output a first trigger signal to the camera, configured to output a driving signal to the probe light source such that the probe light source irradiates the probe optical signal to the sample for the time-resolution time, configured to output a second trigger signal to a bias unit in a turn-on interval, and configured not to output the second trigger signal to the bias unit in a turn-off interval; and
a bias unit configured to apply, to the sample, a bias signal generated based on the second trigger signal in the turn-on interval and configured not to apply the bias signal to the sample in the turn-off interval,
wherein the camera is configured to generate a first reflection image of the sample using a signal reflected from the sample when the probe optical signal is irradiated to the sample for the time-resolution time in the turn-on interval and generate a second reflection image of the sample using a signal reflected from the sample when the probe optical signal is irradiated to the sample for the time-resolution time in the turn-off interval, and
wherein the control unit is configured to generate a time-resolved thermoreflectance image of the sample, based on the generated first reflection image and the generated second reflection image.

2. The device of claim 1, wherein
a duty cycle of the second trigger signal varies.

3. The device of claim 1, wherein
the bias unit comprises a waveform amplifier,
wherein the control unit is configured to output the second trigger signal of a first duty cycle to the waveform amplifier, and
wherein the waveform amplifier is configured to generate the bias signal by amplifying the second trigger signal.

4. The device of claim 1, wherein
each of the turn-on interval and the turn-off interval has a time length corresponding to one image frame of the camera.

5. The device of claim 1, wherein
the control unit is configured to output a probe light source monitoring signal to an oscilloscope to display an output point in time of the driving signal.

6. The device of claim 1, wherein
the control unit is configured to, when an application point in time of the bias signal lags by a first time with respect to an output point in time of the first trigger signal and an output point in time of the second trigger signal, control the probe light source such that an output point in time of the probe optical signal lags by the first time.

7. The device of claim 1, wherein
the control unit is configured to select an irradiation point in time of the probe light source as a specific point in time in a subsequent image frame of the camera and generate a time-resolved thermoreflectance image, of the sample, corresponding to the selected specific point in time.

8. A method of measuring a time-resolved thermal image by a device for
measuring a time-resolved thermal image, the method comprising:
outputting a first trigger signal to a camera;
outputting a driving signal to a probe light source such that the probe light source irradiates a probe optical signal to a sample for a time-resolution time and irradiating the probe optical signal through the probe light source to the sample for the time-resolution time;
not outputting a second trigger signal to a bias unit in a turn-off interval and outputting the second trigger signal to the bias unit in a turn-on interval;
not applying a bias signal to the sample in the turn-off interval and applying the bias signal to the sample by generating the bias signal based on the second trigger signal in the turn-on interval;
generating a first reflection image of the sample using a signal reflected from the sample when the probe optical signal is irradiated to the sample for the time-resolution time in the turn-on interval;
generating a second reflection image of the sample using a signal reflected from the sample when the probe optical signal is irradiated to the sample for the time-resolution time in the turn-off interval; and
generating a time-resolved thermoreflectance image of the sample, based on the generated first reflection image and the generated second reflection image.

9. The method of claim 8, wherein
a duty cycle of the second trigger signal varies.

10. The method of claim 8, wherein
the bias unit comprises a waveform amplifier,
wherein the waveform amplifier is configured to generate the bias signal by amplifying the second trigger signal when the waveform amplifier receives the second trigger signal of a first duty cycle.

11. The method of claim 8, wherein
each of the turn-on interval and the turn-off interval has a time length corresponding to one image frame of the camera.
